# EUROPÄISCHE PATENTSCHRIFT

(11) **EP 1 744 102 B1**
(45) Veröffentlichungstag und Bekanntmachung des Hinweises auf die Patenterteilung: **16.05.2012**
(21) Anmeldenummer: 06011802.3
(22) Anmeldetag: 08.06.2006
(51) Int. Cl.: F23N 1/02, F23N 5/18, G01M 3/28

(54) **Gasbrenner**
Gas burner
Brûleur à gaz

(30) Priorität: 14.07.2005 DE 102005033611
(43) Veröffentlichungstag der Anmeldung: 17.01.2007
(73) Patentinhaber: Honeywell Technologies Sarl, 1180 Rolle (CH)
(72) Erfinder: Vrolijk, Enno, 7751 DX Dalen (NL)
(74) Vertreter: Sturm, Christoph

(56) Entgegenhaltungen:
- DE-A1- 3 409 050
- DE-A1- 19 824 521
- JP-A- 58 193 433
- US-A- 3 583 842
- US-A- 4 043 355
- US-A- 4 825 198

## Beschreibung

Die Erfindung betrifft einen Gasbrenner nach Anspruch 1.

Regeleinrichtungen für Gasbrenner sind aus der DE 198 24 521 B4 , aus der DE 199 22 226 C1 sowie aus der US 4 825 198 A bekannt. So offenbart die DE 198 24 521 B4 eine Regeleinrichtung für einen Gasbrenner, mit Hilfe derer einem Gasbrenner ein Gasstrom sowie ein Verbrennungsluftstrom zugeführt werden kann. In einer einen Gasstrom führenden Gasleitung ist ein Regelventil positioniert, wobei die Gasleitung mit einer Gasdüse in eine den Verbrennungsluftstrom führenden Verbrennungsluftleitung mündet. Der Verbrennungsluftleitung ist ein Gebläse zugeordnet. Weiterhin umfasst die Regeleinrichtung gemäß DE 198 24 521 B4 einen Sensor, wobei der Sensor mit einem ersten Messpunkt an der den Gasstrom führenden Gasleitung und mit einem zweiten Messpunkt an der den Verbrennungsluftstrom führenden Verbrennungsluftleitung angreift. Der Sensor ist als Differenzdrucksensor oder Durchflusssensor ausgebildet und stellt ein elektrisches bzw. elektronisches Signal bereit, auf Grundlage dessen das in die Gasleitung integrierte Regelventil betätigt wird. Bei der Regeleinrichtung gemäß DE 199 22 226 C1 greift der Sensor mit einem Messpunkt an der den Gasstrom führenden Gasleitung und mit einem zweiten Messpunkt an einem Referenzsystem an, in welchem ein Referenzdruck herrscht, der dem Verbrennungsluftdruck entspricht. Auch bei der DE 199 22 226 C1 erzeugt der Sensor ein elektrisches bzw. elektronisches Signal, welches zur Betätigung des oder jedes in die Gasleitung integrierten Gasventils verwendet wird.

Die US 4825198 A offenbart eine Regeleinrichtung zur Dichtigkeitsüberprüfung der Ventile V1 und V2 eines Gasbrenners, wobei dem Gasbrenner über eine Gasleitung 1, in der das Ventil V1 angeordnet ist, ein Gasstrom zugeführt wird, wobei das von eines Sensors 5 bereitgestellte Signal zur Dichtigkeitsprüfung des Ventils V1 und des Ventils V2, welche stromabwärts des Messpunkts des Sensors 5 integriert ist, derart verwendet wird, dass dann, wenn auf ein undichtes Ventil V1und auf ein undichtes Ventil V2 geschlossen wird, die Regeleinrichtung 2 in einen Sicherheitszustand überführt wird und das Zünden des Gasbrenners blockiert, und dass dann, wenn auf ein dichtes Regelventil V1 und auf ein dichtes Sicherheitsventil V2 geschlossen wird, die Regeleinrichtung 2 das Zünden des Gasbrenners zulässt. Weiterhin offenbart die US 4825198 A, dass der Sensor 5 einerseits mit einem Messpunkt an der Gasstrom führenden Gasleitung 1 stromabwärts des Ventils V1 angreift und als Differenzdrucksensor ausgebildet ist und dass beide Ventile V1 und V2 Sicherheitsventile sind.

Der vorliegenden Erfindung liegt das Problem zu Grunde, einen neuartigen Gasbrenner zu schaffen.

Dieses Problem wird durch einen Gasbrenner mit den Merkmalen des Anspruchs 1 gelöst. Erfindungsgemäß wird das vom Sensor bereitgestellte Signal zur Dichtigkeitsprüfung des Regelventils und eines Sicherheitsventils, welches stromabwärts des ersten Messpunkts des Sensors in die Gasleitung integriert ist, derart verwendet, dass dann, wenn auf ein undichtes Regelventil und/oder auf ein undichtes Sicherheitsventil geschlossen wird, die Regeleinrichtung in einen Sicherheitszustand überführt wird und das Zünden des Gasbrenners blockiert, und dass dann, wenn auf ein dichtes Regelventil und auf ein dichtes Sicherheitsventil geschlossen wird, die Regeleinrichtung das Zünden des Gasbrenners zulässt.

Bevorzugte Weiterbildungen der Erfindung ergeben sich aus den Unteransprüchen und der nachfolgenden Beschreibung. Nachfolgend werden Ausführungsbeispiele der Erfindung, ohne hierauf beschränkt zu sein, anhand der Zeichnung näher erläutert. In der Zeichnung zeigt:
- Fig. 1:: eine schematisierte Darstellung einer ersten Regeleinrichtung für einen Gasbrenner;
- Fig. 2:: eine schematisierte Darstellung einer zweiten Regeleinrichtung für einen Gasbrenner; und
- Fig. 3:: eine schematisierte Darstellung einer weiteren Regeleinrichtung für einen Gasbrenner.

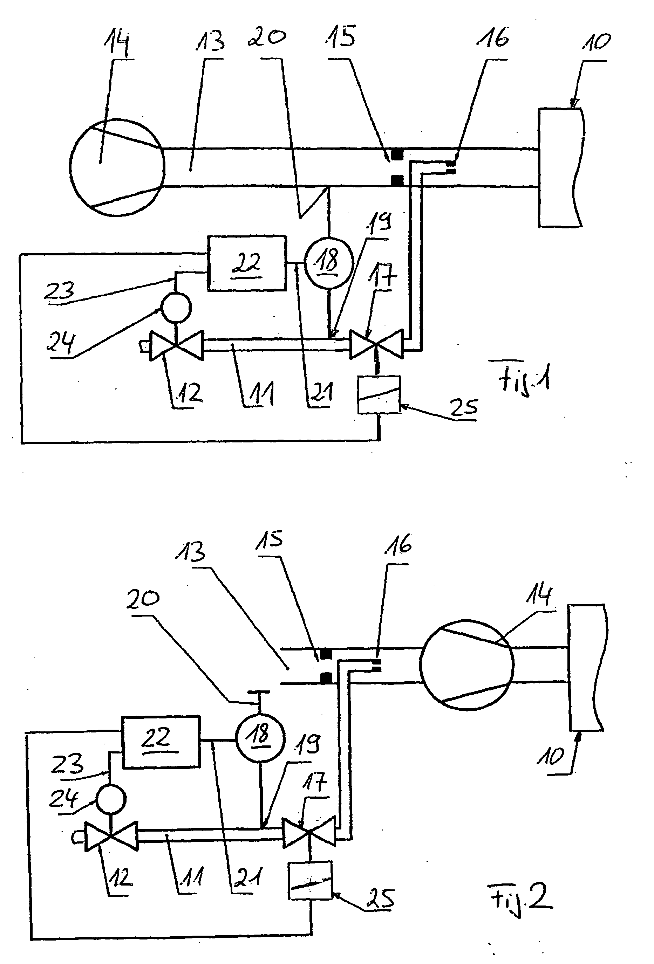

Nachfolgend wird die hier vorliegende Erfindung unter Bezugnahme auf Fig. 1 bis 3 in größerem Detail beschrieben.

Fig. 1 zeigt eine Regeleinrichtung für einen Gasbrenner, mit Hilfe derer einem Gasbrenner 10 ein Gas-/Luftgemisch zugeführt werden kann. Um dem Gasbrenner 10 einen Gasstrom zuzuführen, ist eine Gasleitung 11 vorgesehen, wobei in die Gasleitung 11 mindestens ein modulierendes Regelventil 12 integriert ist.

Die Zuführung von Verbrennungsluft zum Gasbrenner 10 erfolgt über eine Verbrennungsluftleitung 13, der ein Gebläse 14 zugeordnet ist. Gemäß Fig. 1 ist in die Verbrennungsluftleitung 13 eine Blende bzw. Drosselstelle 15 integriert, wobei die Gasleitung 11 mit einer Gasdüse 16 stromabwärts der Drosselstelle 15 in die Verbrennungsluftleitung 13 mündet. Das Gebläse 14 ist stromaufwärts der Drosselstelle 15 der Verbrennungsluftleitung 13 zugeordnet, wobei die Drehzahl des Gebläses den Verbrennungsluftdruck und damit den Verbrennungsluftstrom bestimmt. Stromabwärts des oder jedes Regelventils 12 ist in die Gasleitung 11 ein Sicherheitsventil 17 integriert. Die Regeleinrichtung der Fig. 1 umfasst weiterhin einen Sensor 18, der als Differenzdrucksensor oder Durchflusssensor ausgebildet ist. Mit einem ersten Messpunkt 19 ist der Sensor 18 an die Gasleitung 11 angeschlossen. Mit einem zweiten Messpunkt 20 hingegen ist der Sensor 18 an die Verbrennungsluftleitung 13 angeschlossen. In Strömungsrichtung des Gases ist der erste Messpunkt 19 stromaufwärts des Sicherheitsventils 17 und stromabwärts des oder jedes Regelventils 12 positioniert, der zweite Messpunkt 20 ist in Strömungsrichtung der Verbrennungsluft stromaufwärts der Drosselstelle 15 angeordnet. Abhängig vom in der Verbrennungsluftleitung 13 herrschenden Verbrennungsluftdruck und dem in der Gasleitung 11 herrschenden Gasdruck bzw. abhängig von dem Durchfluss durch die Verbrennungsluftleitung 13 bzw. Gasleitung 11 erzeugt der Sensor 18 ein elektrisches bzw. elektronisches Signal 21.

Das vom Sensor 18 bereitgestellte Signal 21 kann zur Betätigung bzw. Verstellung des oder jedes in die Gasleitung 11 integrierten Regelventils 12 verwendet werden. Das vom Sensor 18 erzeugte, elektrische bzw. elektronische Signal 21 wird hierzu einem Regler 22 zugeführt, der aus dem vom Sensor 18 bereitgestellten Signal 21 ein Regelungssignal 23 für einen Stellantrieb 24 erzeugt, mit Hilfe dessen das in Fig. 1 dargestellte, modulierende Regelventil 12 betätigt werden kann.

Die Regeleinrichtung gemäß Fig. 2 entspricht im Wesentlichen der Regeleinrichtung der Fig. 1, weshalb für gleiche Baugruppen gleiche Bezugsziffern verwendet werden. Die Regeleinrichtung der Fig. 2 unterscheidet sich von der Regeleinrichtung der Fig. 1 lediglich dadurch, dass bei der Regeleinrichtung der Fig. 2 das Gebläse 14 stromabwärts der Drosselstelle 15 sowie stromabwärts der Gasdüse 16 in die Verbrennungsluftleitung 13 integriert ist. Ein weiterer Unterschied liegt darin, dass der Sensor 18 mit dem zweiten Messpunkt 20 nicht an der Verbrennungsluftleitung 13 angreift, sondern vielmehr an einem Referenzsystem, in welchem ein Referenzdruck herrscht, der dem Verbrennungsluftdruck entspricht. Auch bei der Regeleinrichtung der Fig. 2 wird das vom Sensor 18 bereitgestellte Signal 21 zur Betätigung bzw. Verstellung des oder jedes in die Gasleitung 11 integrierten Regelventils 12 verwendet.

Im Sinne der hier vorliegenden Erfindung wird nun vorgeschlagen, auf Basis des vom Sensor 18 bereitgestellten Signals 21, auf Basis dessen bei den Ausführungsbeispielen der Fig. 1 und 2 das oder jedes die Gasleitung 11 integrierte, modulierende Regelventil 12 betätigt bzw. geregelt wird, eine Dichtigkeitsprüfung für das Regelventil 12 und/oder das Sicherheitsventil 17 durchzuführen. Das vom Sensor 18 bereitgestellte Signal wird demnach im Sinne der hier vorliegenden Erfindung zur Dichtigkeitsprüfung der in die Gasleitung 11 integrierten Ventile 12 und 17 verwendet, wobei hierzu wie nachfolgend beschrieben, vorgegangen wird.

In dem Fall, in dem der Sensor 18 als Durchflusssensor, nämlich als bidirektionaler Durchflusssensor, ausgebildet ist, wird zur Dichtigkeitsprüfung des Regelventils 12 bei abgeschaltetem Gebläse 14, abgeschaltetem Gasbrenner 10 sowie bei geschlossenem Regelventil 12 sowie ebenfalls geschlossenen Sicherheitsventil 17 das vom Sensor 18 bereitgestellte Signal 21 mit einem vorgegebenen Grenzwert verglichen, wobei dann, wenn das vom Sensor 18 bereitgestellte Signal 21 unterhalb dieses Grenzwerts liegt, auf ein dichtes Regelventil 12 geschlossen werden kann.

Liegt hingegen in diesem Fall das vom Sensor 18 bereitgestellte Signal oberhalb des vorgegebenen Grenzwerts, so wird auf ein undichtes Regelventil 12 geschlossen. Zur Dichtigkeitsprüfung des Sicherheitsventils 17 wird bei abgeschaltetem Gasbrenner 10, bei laufendem Gebläse 14, bei geschlossenem Regelventil 12 sowie bei ebenfalls geschlossenem Sicherheitsventil 17 das vom Sensor 18 bereitgestellte Signal 21 wiederum mit einem vorgegebenen Grenzwert verglichen, wobei dann, wenn das vom Sensor 18 bereitgestellte Signal 21 unterhalb dieses Grenzwerts liegt, auf ein dichtes Sicherheitsventil 17 geschlossen wird. Liegt hingegen in diesem Fall das vom Sensor 18 bereitgestellte Signal 21 oberhalb des vorgegebenen Grenzwerts, so wird auf ein undichtes Sicherheitsventil 17 geschlossen.

Die Auswertung des vom Sensor 18 bereitgestellten Signals 21 zur Dichtigkeitsprüfung der in die Gasleitung 11 integrierten Ventile 12 und 17 wird im Ausführungsbeispiel der Fig. 1 und 2 vorzugsweise vom Regler 22 übernommen, der neben dem Regelventil 12 gemäß Fig. 1 und 2 in diesem Fall ebenfalls das Sicherheitsventil 17, nämlich ein dem Sicherheitsventil 17 zugeordnetes Stellglied 25, ansteuert. Wird bei Auswertung des vom Sensor 18 bereitgestellten Signals 21 auf ein undichtes Regelventil 12 und/oder auf ein undichtes Sicherheitsventil 17 geschlossen, so wird im Sinne der Erfindung die Regeleinrichtung in einen definierten Sicherheitszustand überführt und der Gasbrenner 10 wird blockiert, so dass derselbe nicht zünden kann. Wird hingegeben bei Auswertung des vom Sensor 18 bereitgestellten Signals 21 auf ein dichtes Regelventil 12 und auf ein dichtes Sicherheitsventil 17 geschlossen, so lässt die erfindungsgemäße Regeleinrichtung das Zünden des Gasbrenners 10 zu.

Ist der Sensor 18 nicht, wie oben beschrieben, als Durchflusssensor ausgebildet, sondern vielmehr als Differenzdrucksensor, so wird zur Dichtigkeitsprüfung des Regelventils 12 bei abgeschaltetem Gebläse 14, bei ausgeschaltetem Gasbrenner 10, bei geschlossenem Regelventil 12 sowie bei geschlossenem Sicherheitsventil 17 das Sicherheitsventil 17 für eine bestimmte Zeitspanne geöffnet, so dass sich evtl. in dem zwischen den Ventilen 12, 17 erstreckenden Abschnitt der Gasleitung 11 befindendes Gas entweichen kann. Anschließend wird das vom Sensor 18 bereitgestellte Signal 21 über eine bestimmte Zeitspanne ausgewertet und hierbei mit einem vorgegebenen Grenzwert verglichen, wobei dann, wenn die zeitliche Ableitung bzw. Änderung des vom Sensor 18 bereitgestellten Signals 21 nach einer bestimmten Zeit unterhalb des vorgegebenen Grenzwerts liegt, auf ein dichtes Regelventil 12 geschlossen wird. Wird hingegen nach der vorbestimmten Zeitspanne festgestellt, dass die zeitliche Ableitung bzw. Änderung des vom Sensor 18 bereitgestellten Signals 21 oberhalb des vorgegebenen Grenzwerts liegt, so wird auf undichtes Regelventil 12 geschlossen. Alternativ kann zur Dichtigkeitsprüfung des Regelventils 12, in dem Fall, in welchem der Sensor 18 als Differenzdrucksensor ausgebildet ist, nach Abschaltung des Gasbrenners 10 sowie des Gebläses 14 das Sicherheitsventil 17 nach dem Regelventil 12 geschlossen werden, wobei die Auswertung des vom Sensor 18 bereitgestellten Signals auf die oben beschriebene Art und Weise erfolgt.

Bei einem als Differenzdrucksensor ausgebildeten Sensor 18 wird zur Dichtigkeitsprüfung des Sicherheitsventils 17 bei abgeschaltetem Gebläse 14, ausgeschaltetem Gasbrenner 10, geschlossenem Regelventil 12 sowie ebenfalls geschlossenen Sicherheitsventil 17 das Regelventil 12 für eine vorgegebene Zeitspanne geöffnet, so dass sich in dem zwischen den Ventilen 12 und 17 erstreckenden Abschnitt der Gasleitung 11 ein Druck aufbauen kann. Anschließend wird für eine bestimmte Zeitspanne die zeitliche Ableitung bzw. Änderung des vom Sensor 18 bereitgestellten Signals 21 überprüft und mit einem vorgegebenen Grenzwert verglichen, wobei dann, wenn die zeitliche Ableitung bzw. Änderung des vom Sensor 18 bereitgestellten Signals 21 unterhalb des vorgegebenen Grenzwerts liegt, auf ein dichtes Sicherheitsventil 17 geschlossen wird. Liegt hingegen die zeitliche Ableitung bzw. Änderung des Signals 21 des Sensors 18 oberhalb des vorgegebenen Grenzwerts, so wird auf ein undichtes Sicherheitsventil 17 geschlossen. Alternativ kann bei einem als Differenzdrucksensor ausgebildeten Sensor 18 zur Dichtigkeitsprüfung des Sicherheitsventils 17 nach Abschaltung des Gasbrenners 10 und des Gebläses 14 das Regelventil 12 nach dem Sicherheitsventil 17 geschlossen und das vom Sensor 18 bereitgestellte Signal 21 auf die oben beschriebene Art und Weise ausgewertet werden.

Auch dann, wenn der Sensor 18 als Differenzdrucksensor ausgebildet ist, wird in dem Fall, in dem auf Basis der Auswertung des vom Sensor 18 bereitgestellten Signals 21 auf ein undichtes Regelventil 12 und/oder auf undichtes Sicherheitsventil 17 geschlossen wird, die Regeleinrichtung in einen Sicherheitszustand überführt und das Zünden des Gasbrenners 10 blockiert. Dann hingegen, wenn auf ein dichtes Regelventil 12 und auf ein dichtes Sicherheitsventil 17 geschlossen wird, lässt die Regeleinrichtung das Zünden des Gasbrenners 10 zu.

Im Ausführungsbeispiel der Fig. 1 und 2 wird demnach das vom Sensor 18 bereitgestellte Signal 21 einerseits zur Betätigung des modulierenden Regelventils 12 und damit zur Regelung des Gasstroms durch die Gasleitung 11 verwendet, andererseits wird das vom Sensor 18 bereitgestellte Signal 21 zur Dichtigkeitsprüfung der in die Gasleitung 11 integrierten Ventile 12 und 17 verwendet.

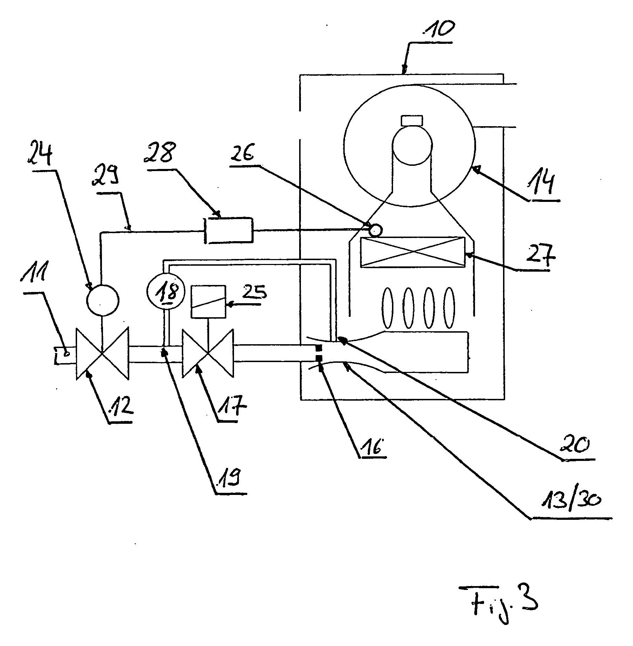

Alternativ kann die erfindungsgemäße Auswertung des vom als Differenzdrucksensor oder Durchflusssensor ausgebildeten Sensors 18 bereitgestellten Signals 21 zur Dichtigkeitsprüfung der in die Gasleitung 11 integrierten Ventile 12 und 17 auch bei einer Regeleinrichtung für einen Gasbrenner zum Einsatz kommen, bei welcher das modulierende Regelventil 12 auf Basis eines anderen Messwerts, z. B. eines Temperaturmesswerts geregelt wird. So zeigt Fig. 3 eine Regeleinrichtung für einen Gasbrenner 10, bei welcher das in die Gasleitung 11 integrierte, modulierende Regelventil 12 auf Basis eines von einem Temperatursensor 26 bereitgestellten Messsignals geregelt wird, der einem im Bereich des Gasbrenners 10 positionierten Wärmetauscher 27 zugeordnet ist. Das vom Temperatursensor 26 bereitgestellte Messsignal wird dann in einem Regler 28 ausgewertet, um ein Regelungssignal 29 für den Stellantrieb 24 des modulierenden Regelventils 12 zu generieren.

Auch bei der Regeleinrichtung der Fig. 3 greift der als Differenzdrucksensor bzw. Durchflusssensor ausgebildete Sensor 18 mit einem ersten Messpunkt 19 an der Gasleitung 11 an, nämlich stromabwärts des Regelventils 12 und stromaufwärts des Sicherheitsventils 17. Mit dem zweiten Messpunkt 20 greift der Sensor 18 im Ausführungsbeispiel der Fig. 3 an einer den Verbrennungsluftstrom führenden Verbrennungsluftleitung 13 an, nämlich im Ausführungsbeispiel der Fig. 3 an einem Venturi-Abschnitt 30 der Verbrennungsluftleitung 13. Auch bei einer derartigen Regeleinrichtung kann das vom Sensor 18 bereitgestellte Messsignal zur Dichtigkeitsprüfung des Regelventils 12 sowie des Sicherheitsventils 17 verwendet werden, und zwar analog zu der im Zusammenhang mit den Ausführungsbeispielen der Fig. 1 und 2 beschriebenen Art und Weise, so dass diesbezüglich auf die obigen Ausführungen verwiesen wird. Im Ausführungsbeispiel der Fig. 3 kann der Sensor 18 mit seinem Messpunkt 20 auch am Eingang des Gebläses 14 angreifen. In dem Fall, in dem der Sensor an den Eingang des Gebläses angeschlossen ist, ist derselbe als Differenzdrucksensor ausgeführt.

Im Sinne der hier vorliegenden Erfindung wird demnach eine Regeleinrichtung für einen Gasbrenner vorgeschlagen, bei welchem auf Basis eines von einem als Differenzdrucksensor bzw. Durchflusssensor ausgebildeten Sensors bereitgestellten Signals eine Dichtigkeitsprüfung von in die Gasleitung integrierten Ventilen erfolgt. Der Sensor greift mit einem Messpunkt an einer Gasleitung an, nämlich stromabwärts eines modulierenden Regelventils und stromaufwärts eines Sicherheitsventils. Mit einem zweiten Messpunkt greift der Sensor entweder an der den Verbrennungsluftstrom führenden Verbrennungsluftleitung oder an dem Gebläse oder an einem Referenzsystem an. Bevorzugt findet die Erfindung bei einer Regeleinrichtung Verwendung, bei welcher das vom Sensor bereitgestellte Signal neben der Dichtigkeitsprüfung auch zur Betätigung des Regelventils und damit zur Regelung des Gasstroms verwendet wird.

Vorzugsweise erfolgt die Dichtigkeitsprüfung des Regelventils 12 sowie die Dichtigkeitsprüfung des Sicherheitsventils 17 stets nacheinander, und zwar derart, dass dann, wenn bei Dichtigkeitsprüfung des Regelventils 12 die Dichtheit desselben festgestellt wurde, die Dichtigkeitsprüfung des Sicherheitsventils 17 durchgeführt wird. Die Dichtigkeitsprüfungen des Regelventils 12 sowie des Sicherheitsventils 17 können jedoch auch unabhängig voneinander durchgeführt werden.

Die Stellantriebe bzw. Stellglieder der Ventile 12, 17 können z. B. über ein in dieselben integriertes Federelement im Falle eines Stromausfalls automatisch geschlossen werden. Ebenso können die Stellantriebe bzw. Stellglieder einen Energiespeicher aufweisen, um nach Stromausfall für ein automatisches Schließen der Ventile 12, 17 zu sorgen. Auch ist es möglich, dass die Stellantriebe bzw. Stellglieder der Ventile 12, 17 weder eine Feder noch einen Energiespeicher aufweisen und demnach bei einem Stromausfall nicht selbsttätig geschlossen werden.

### Bezugszeichenliste

- 10: Gasbrenner
- 11: Gasleitung
- 12: Regelventil
- 13: Verbrennungsluftleitung
- 14: Gebläse
- 15: Drosselstelle
- 16: Gasdüse
- 17: Sicherheitsventil
- 18: Sensor
- 19: Messpunkt
- 20: Messpunkt
- 11: Signal
- 22: Regler
- 23: Regelungssignal
- 24: Stellantrieb
- 25: Stellglied
- 26: Temperatursensor
- 27: Wärmetauscher
- 28: Regler
- 29: Regelungssignal
- 30: Venturi-Abschnitt

## Patentansprüche

1. Gasbrenner mit einer Regeleinrichtung, wobei dem Gasbrenner (10) über eine Gasleitung (11), in der ein Regelventil (12) der Regeleinrichtung angeordnet ist, ein Gasstrom zuführbar ist, wobei dem Gasbrenner (10) weiterhin über eine Verbrennungsluftleitung (13) ein von einem Gebläse (14) bereitgestellte Verbrennungsluftstrom zuführbar ist, wobei das Regelventil (12) der Regeleinrichtung abhängig von einem Signal eines als Differenzdrucksensor oder als Durchflusssensor ausgebildeten Sensors (18) geregelt wird, wobei der Sensor (18) einerseits mit einem ersten Messpunkt (19) an der einen Gasstrom führenden Gasleitung (11) stromabwärts des Regelventils (12) angreift, und wobei der Sensor (18) andererseits mit einem zweiten Messpunkt (20) an der den Verbrennungsluftstrom führenden Verbrennungsluftleitung (13) oder an dem den Verbrennungsluftstrom bewirkenden Gebläse (14) oder an einem Referenzsystem angreift, wobei das vom Sensor (18) bereitgestellte Signal zur Dichtigkeitsprüfung des Regelventils (12) und eines Sicherheitsventils (17), welches stromabwärts des ersten Messpunkts (19) des Sensors (18) in die Gasleitung (11) integriert ist, derart verwendet wird, dass dann, wenn auf ein undichtes Regelventil (12) und/oder auf ein undichtes Sicherheitsventil (17) geschlossen wird, die Regeleinrichtung in einen Sicherheitszustand überführt wird und das Zünden des Gasbrenners (10) blockiert, und dass dann, wenn auf ein dichtes Regelventil (12) und auf ein dichtes Sicherheitsventil (17) geschlossen wird, die Regeleinrichtung das Zünden des Gasbrenners (10) zulässt.

2. Gasbrenner nach Anspruch 1, wobei bei einem als Durchflusssensor ausgebildeten Sensor (18) zur Dichtigkeitsprüfung des Regelventils (12) bei ausgeschaltetem Gebläse (14), bei ausgeschaltetem Gasbrenner (10), bei geschlossenem Regelventil (12) und bei geschlossenem Sicherheitsventil (17) überprüft wird, ob das vom Sensor (18) bereitgestellte Signal (21) unterhalb eines vorgegebenen Grenzwerts liegt, wobei dann, wenn das Signal (21) unterhalb des Grenzwerts liegt, auf ein dichtes Regelventil (12) geschlossen wird, und wobei dann, wenn das Signal (21) oberhalb des Grenzwerts liegt, auf ein undichtes Regelventil (12) geschlossen wird.

3. Gasbrenner nach Anspruch 1 oder 2, wobei bei einem als Durchflusssensor ausgebildeten Sensor (18) zur Dichtigkeitsprüfung des Sicherheitsventils (17) bei eingeschaltetem Gebläse (14), bei ausgeschaltetem Gasbrenner (10), bei geschlossenem Regelventil (12) und bei geschlossenem Sicherheitsventil (17) überprüft wird, ob das vom Sensor (18) bereitgestellte Signal (21) unterhalb eines vorgegebenen Grenzwerts liegt, wobei dann, wenn das Signal (21) unterhalb des Grenzwerts liegt, auf ein dichtes Sicherheitsventil (17) geschlossen wird, und wobei dann, wenn das Signal (21) oberhalb des Grenzwerts liegt, auf ein undichtes Sicherheitsventil (17) geschlossen wird.

4. Gasbrenner nach Anspruch 1, wobei bei einem als Differenzdrucksensor ausgebildeten Sensor (18) zur Dichtigkeitsprüfung des Regelventils (12) bei abgeschaltetem Gebläse (14), bei ausgeschaltetem Gasbrenner (10), bei geschlossenem Regelventil (12) und bei geschlossenem Sicherheitsventil (17) das Sicherheitsventil (17) für eine bestimmte Zeitspanne geöffnet wird, und dass anschließend überprüft wird, ob die zeitliche Ableitung bzw. Änderung des vom Sensor (18) bereitgestellten Signals (21) unterhalb eines vorgegebenen Grenzwerts liegt, wobei dann, wenn die zeitliche Ableitung bzw. Änderung des Signals (21) unterhalb des Grenzwerts liegt, auf ein dichtes Regelventil (12) geschlossen wird, und wobei dann, wenn die zeitliche Ableitung bzw. Änderung des Signals (21) oberhalb des Grenzwerts liegt, auf ein undichtes Regelventil (12) geschlossen wird.

5. Gasbrenner nach Anspruch 1 oder 4, wobei bei einem als Differenzdrucksensor ausgebildeten Sensor (18) zur Dichtigkeitsprüfung des Sicherheitsventils (17) bei abgeschaltetem Gebläse (14), bei ausgeschaltetem Gasbrenner (10), bei geschlossenem Regelventil (12) und bei geschlossenem Sicherheitsventil (17) das Regelventil (12) für eine bestimmte Zeitspanne geöffnet wird, und dass anschließend überprüft wird, ob die zeitliche Ableitung bzw. Änderung des vom Sensor (18) bereitgestellten Signals (21) unterhalb eines vorgegebenen Grenzwerts liegt, wobei dann, wenn die zeitliche Ableitung bzw. Änderung des Signals (21) unterhalb des Grenzwerts liegt, auf ein dichtes Sicherheitsventil (17) geschlossen wird, und wobei dann, wenn die zeitliche Ableitung bzw. Änderung des Signals (21) oberhalb des Grenzwerts liegt, auf ein undichtes Sicherheitsventil (17) geschlossen wird.

6. Gasbrenner nach Anspruch 1, wobei bei einem als Differenzdrucksensor ausgebildeten Sensor (18) zur Dichtigkeitsprüfung des Regelventils (12) nach Abschaltung des Gasbrenners (10) und des Gebläses (14) das Sicherheitsventil (17) nach dem Regelventil (12) geschlossen wird, und dass anschließend überprüft wird, ob die zeitliche Ableitung bzw. Änderung des vom Sensor (18) bereitgestellten Signals (21) unterhalb eines vorgegebenen Grenzwerts liegt, wobei dann, wenn die zeitliche Ableitung bzw. Änderung des Signals (21) unterhalb des Grenzwerts liegt, auf ein dichtes Regelventil (12) geschlossen wird, und wobei dann, wenn die zeitliche Ableitung bzw. Änderung des Signals (21) oberhalb des Grenzwerts liegt, auf ein undichtes Regelventil (12) geschlossen wird.

7. Gasbrenner nach Anspruch 1 oder 6, wobei bei einem als Differenzdrucksensor ausgebildeten Sensor (18) zur Dichtigkeitsprüfung des Sicherheitsventils (17) nach Abschaltung des Gasbrenners (10) und des Gebläses (14) das Regelventil (12) nach dem Sicherheitsventil (17) geschlossen wird, und dass anschließend überprüft wird, ob die zeitliche Ableitung bzw. Änderung des vom Sensor (18) bereitgestellten Signals (21) unterhalb eines vorgegebenen Grenzwerts liegt, wobei dann, wenn die zeitliche Ableitung bzw. Änderung des Signals (21) unterhalb des Grenzwerts liegt, auf ein dichtes Sicherheitsventil (17) geschlossen wird, und wobei dann, wenn die zeitliche Ableitung bzw. Änderung des Signals (21) oberhalb des Grenzwerts liegt, auf ein undichtes Sicherheitsventil (17) geschlossen wird.

## Claims

1. Gas burner with a control device, wherein a stream of gas can be fed to the gas burner (10) via a gas line (11), in which a control valve (12) of the control device is arranged, wherein a stream of combustion air provided by a blower (14) can also be fed to the gas burner (10) via a combustion-air line (13), wherein the control valve (12) of the control device is controlled according to a signal of a sensor (18) formed as a differential-pressure sensor or as a flow sensor, wherein the sensor (18) on the one hand acts with a first measuring point (19) on the gas line (11), carrying a stream of gas, downstream of the control valve (12), and wherein the sensor (18) on the other hand acts with a second measuring point (20) on the combustion-air line (13), carrying the stream of combustion air, or on the blower (14), producing the stream of combustion air, or on a reference system, wherein the signal provided by the sensor (18) is used for testing the leak-tightness of the control valve (12) and of a safety valve (17), which is integrated in the gas line (11) downstream of the first measuring point (19) of the sensor (18), in such a way that, whenever a leaking control valve (12) and/or a leaking safety valve (17) is assumed, the control device is made to revert to a safe state and the ignition of the gas burner (10) is prevented, and that, whenever a non-leaking control valve (12) and a non-leaking safety valve (17) are assumed, the control device allows the ignition of the gas burner (10).

2. Gas burner according to Claim 1, wherein, with a sensor (18) formed as a flow sensor for the leak-tightness testing of the control valve (12) with the blower (14) switched off, with the gas burner (10) switched off, with the control valve (12) closed and with the safety valve (17) closed, it is checked whether the signal (21) provided by the sensor (18) lies below a prescribed limit value, wherein, whenever the signal (21) lies below the limit value, a non-leaking control valve (12) is assumed and, whenever the signal (21) lies above the limit value, a leaking control valve (12) is assumed.

3. Gas burner according to Claim 1 or 2, wherein, with a sensor (18) formed as a flow sensor for the leak-tightness testing of the safety valve (17), with the blower (14) switched on, with the gas burner (10) switched off, with the control valve (12) closed and with the safety valve (17) closed, it is checked whether the signal (21) provided by the sensor (18) lies below a prescribed limit value, wherein, whenever the signal (21) lies below the limit value, a non-leaking safety valve (17) is assumed and, whenever the signal (21) lies above the limit value, a leaking safety valve (17) is assumed.

4. Gas burner according to Claim 1, wherein, with a sensor (18) formed as a differential-pressure sensor for the leak-tightness testing of the control valve (12), with the blower (14) switched off, with the gas burner (10) switched off, with the control valve (12) closed and with the safety valve (17) closed, the safety valve (17) is opened for a specific time period, and wherein it is subsequently checked whether the time derivative or change of the signal (21) provided by the sensor (18) lies below a prescribed limit value, wherein, whenever the time derivative or change of the signal (21) lies below the limit value, a non-leaking control valve (12) is assumed and, whenever the time derivative or change of the signal (21) lies above the limit value, a leaking control valve (12) is assumed.

5. Gas burner according to Claim 1 or 4, wherein, with a sensor (18) formed as a differential-pressure sensor for the leak-tightness testing of the safety valve (17), with the blower (14) switched off, with the gas burner (10) switched off, with the control valve (12) closed and with the safety valve (17) closed, the control valve (12) is opened for a specific time period, and wherein it is subsequently checked whether the time derivative or change of the signal (21) provided by the sensor (18) lies below a prescribed limit value, wherein, whenever the time derivative or change of the signal (21) lies below the limit value, a non-leaking safety valve (17) is assumed, and whenever the time derivative or the change of the signal (21) lies above the limit value, a leaking safety valve (17) is assumed.

6. Gas burner according to Claim 1, wherein, with a sensor (18) formed as a differential-pressure sensor for the leak-tightness testing of the control valve (12), after the gas burner (10) and the blower (14) are switched off, the safety valve (17) is closed after the control valve (12), and wherein it is subsequently checked whether the time derivative or change of the signal (21) provided by the sensor (18) lies below a prescribed limit value, wherein, whenever the time derivative or change of the signal (21) lies below the limit value, a non-leaking control valve (12) is assumed, and wherein, whenever the time derivative or change of the signal (21) lies above the limit value, a leaking control valve (12) is assumed.

7. Gas burner according to Claim 1 or 6, wherein, with a sensor (18) formed as a differential-pressure sensor for the leak-tightness testing of the safety valve (17), after the gas burner (10) and the blower (14) are switched off, the control valve (12) is closed after the safety valve (17), and wherein subsequently it is checked whether the time derivative or change of the signal (21) provided by the sensor (18) lies below a prescribed limit value, wherein, whenever the time derivative or change of the signal (21) lies below the limit value, a non-leaking safety valve (17) is assumed and, whenever the time derivative or change of the signal (21) lies above the limit value, a leaking safety valve (17) is assumed.

## Revendications

1. Brûleur à gaz doté d'un système de régulation, un écoulement de gaz pouvant être amené au brûleur à gaz (10) par un conduit à gaz (11) dans lequel est disposée une soupape de régulation (12) du système de régulation, un écoulement d'air de combustion préparé par un ventilateur (14) pouvant en outre être apporté au brûleur à gaz (10) par un conduit (13) d'air de combustion,
la soupape de régulation (12) du système de régulation étant régulée en fonction d'un signal d'un détecteur (18) configuré comme détecteur de pression différentielle ou comme détecteur de débit, le détecteur (18) engageant d'une part le conduit à gaz (11) qui conduit l'écoulement de gaz par un premier point de mesure (19) situé en aval de la soupape de régulation (12) et le détecteur (18) engageant d'autre part le ventilateur (14) qui délivre l'écoulement d'air de combustion ou un système de référence par un deuxième point de mesure (20) disposé sur le conduit (13) d'air de combustion qui conduit l'écoulement d'air de combustion,
le signal délivré par le détecteur (18) étant utilisé pour vérifier l'étanchéité de la soupape de régulation (12) et d'une soupape de sécurité (17) intégrée dans le conduit à gaz (11) en aval du premier point de mesure (19) du détecteur (18), de telle sorte que le système de régulation est basculé dans un état de sécurité et l'allumage du brûleur à gaz (10) est bloqué s'il est conclu que la soupape de régulation (12) et/ou la soupape de sécurité (17) ne sont pas étanches, et que le système de régulation permet l'allumage du brûleur à gaz (10) s'il est conclu que la soupape de régulation (12) et la soupape de sécurité (17) sont étanches.

2. Brûleur à gaz selon la revendication 1, dans lequel lorsqu'un détecteur (18) configuré comme détecteur de débit sert à vérifier l'étanchéité de la soupape de régulation (12), lorsque le ventilateur (14) est débranché, le brûleur à gaz (10) est débranché, la soupape de régulation (12) est fermée et la soupape de sécurité (17) est fermée, on vérifie si le signal (21) délivré par le détecteur (18) est situé en dessous d'une valeur limite prédéterminée et il est conclu que la soupape de régulation (12) est étanche si le signal (21) est situé en dessous de la valeur limite, et il est conclu que la soupape de régulation (12) n'est pas étanche si le signal (21) est situé au-dessus de la valeur limite.

3. Brûleur à gaz selon les revendications 1 ou 2, dans lequel lorsqu'un détecteur (18) configuré comme détecteur de débit sert à vérifier l'étanchéité de la soupape de sécurité (17), lorsque le ventilateur (14) est branché, le brûleur à gaz (10) est débranché, la soupape de régulation (12) est fermée et la soupape de sécurité (17) est fermée, on vérifie si le signal (21) délivré par le détecteur (18) est situé en dessous d'une valeur limite prédéterminée et il est conclu que la soupape de sécurité (17) est étanche si le signal (21) est situé en dessous de la valeur limite et il est conclu que la soupape de sécurité (17) n'est pas étanche si le signal (21) est situé au-dessus de la valeur limite.

4. Brûleur à gaz selon la revendication 1, dans lequel lorsque le détecteur (18) est configuré comme détecteur de pression différentielle est utilisé pour vérifier l'étanchéité de la soupape de régulation (12), le ventilateur (14) étant débranché, le brûleur à gaz (10) étant débranché, la soupape de régulation (12) étant débranchée et la soupape de sécurité (17) étant débranchée, la soupape de sécurité (17) est ouverte pendant une durée définie et on vérifie ensuite si la dérivée par rapport au temps ou une modification en fonction du temps du signal (21) délivré par le détecteur (18) sont situées en dessous d'une valeur limite prédéterminée, et il est conclu que la soupape de régulation (12) est étanche si la dérivée par rapport au temps ou la modification en fonction du temps du signal (21) sont situées en dessous de la valeur limite, tandis qu'il est conclu que la soupape de régulation (12) n'est pas étanche si la dérivée par rapport au temps ou la modification en fonction du temps du signal (21) sont situées au-dessus de la valeur limite.

5. Brûleur à gaz selon les revendications 1 ou 4, dans lequel lorsque le détecteur (18) configuré comme détecteur de pression différentielle est utilisé pour vérifier l'étanchéité de la soupape de sécurité (17), le ventilateur (14) étant débranché, le brûleur à gaz (10) étant débranché, la soupape de régulation (12) étant débranchée et la soupape de sécurité (17) étant débranchée, la soupape de régulation (12) est ouverte pendant une durée définie et on vérifie ensuite si la dérivée par rapport au temps ou une modification en fonction du temps du signal (21) délivré par le détecteur (18) sont situées en dessous d'une valeur limite prédéterminée, et il est conclu que la soupape de sécurité (17) est étanche si la dérivée par rapport au temps ou la modification en fonction du temps du signal (21) sont situées en dessous de la valeur limite, tandis qu'il est conclu que la soupape de sécurité (17) n'est pas étanche si la dérivée par rapport au temps ou la modification en fonction du temps du signal (21) sont situées au-dessus de la valeur limite.

6. Brûleur à gaz selon la revendication 1, dans lequel lorsque le détecteur (18) configuré comme détecteur de pression différentielle est utilisé pour vérifier l'étanchéité de la soupape de régulation (12), après débranchement du brûleur à gaz (10) et du ventilateur (14), la soupape de sécurité (17) est fermée après la soupape de régulation (12) et on vérifie ensuite si la dérivée par rapport au temps ou une modification en fonction du temps du signal (21) délivré par le détecteur (18) sont situées en dessous d'une valeur limite prédéterminée, et il est conclu que la soupape de régulation (12) est étanche si la dérivée par rapport au temps ou la modification en fonction du temps du signal (21) sont situées en dessous de la valeur limite, tandis qu'il est conclu que la soupape de régulation (12) n'est pas étanche si la dérivée par rapport au temps ou la modification du signal (21) sont situées au-dessus de la valeur limite.

7. Brûleur à gaz selon les revendications 1 ou 6, dans lequel lorsque le détecteur (18) configuré comme détecteur de pression différentielle est utilisé pour vérifier l'étanchéité de la soupape de sécurité (17), après débranchement du brûleur à gaz (10) et du ventilateur (14), la soupape de régulation (12) est fermée après la soupape de sécurité (17) et on vérifie ensuite si la dérivée par rapport au temps ou une modification en fonction du temps du signal (21) délivré par le détecteur (18) sont situées en dessous d'une valeur limite prédéterminée, et il est conclu que la soupape de sécurité (17) est étanche si la dérivée par rapport au temps ou la modification en fonction du temps du signal (21) sont situées en dessous de la valeur limite, tandis qu'il est conclu que la soupape de sécurité (17) n'est pas étanche si la dérivée par rapport au temps ou la modification du signal (21) sont situées au-dessus de la valeur limite.
